# EUROPEAN PATENT APPLICATION

(11) **EP 0 665 129 A1**
(43) Date of publication of application: **02.08.1995**
(21) Application number: 94119649.5
(22) Date of filing: 13.12.1994
(51) Int. Cl.: B60H 1/22, B60H 1/03, B60R 16/02

(54) **An electric heating system for the driver's compartment of a motor vehicle and a control system therefor**

(30) Priority: 01.02.1994 IT TO940055
(71) Applicant: MAGNETI MARELLI CLIMATIZZAZIONE S.r.l., I-10046 Poirino (Torino) (IT)
(72) Inventor: Valentino, Guiseppe, I-10048 Poirino (Torino) (IT)
(74) Representative: Marchitelli, Mauro

(57) **Abstract**

A heating system for the driver's compartment (2) of a motor vehicle (1), in particular a tractor, in which heating occurs by means of a resistor (3) supplied by an alternator (10), the excitation voltage (E) of which is controlled. The central control unit (28) of the system uses a strategy for limiting the maximum voltage (V) delivered by the alternator (10) and the maximum temperature of the resistor (3) so as to avoid danger to the user and damage to the system.

## Description

The present invention relates to a system for heating the passenger compartment of a motor vehicle. As is known, most motor vehicles have a system for heating the passenger compartment.

These systems generally make use of heat taken from the engine by its cooling fluid and by conveying this fluid to the passenger compartment through heating ducts.

Such systems have been adopted almost universally but do have some disadvantages. When the engine is cold, it is necessary to wait several minutes until it warms up, and heat is not supplied to the passenger compartment until the engine-cooling fluid itself reaches a sufficient temperature. It is also necessary to provide the aforesaid ducts for conveying the cooling fluid into the passenger compartment and, while this is generally easily arranged in ordinary motor vehicles, it is difficult to arrange in agricultural vehicles, for example tractors, owing to their particular structure.

In order to overcome this problem, various heating systems have been used of the type which includes a resistor housed in the driving compartment and an electrical generator, typically an alternator, for supplying the resistor; the resistor converts electric energy supplied by the generator into heat energy, heating itself and, as a result, the compartment.

However these heating systems are not free of problems. The electrical generator provided to supply the heating resistor is in fact driven by the vehicle combustion engine, the speed of which varies considerably in use. The voltage and current supplied by the electrical generator therefore vary in accordance with variations in the RPM of the engine.

A control system is therefore required which is able to limit the voltage produced by the generator so that it does not exceed danger levels. It is also necessary to limit the power dissipated by the resistor in order to prevent this from overheating and causing obvious problems.

The object of the present invention is to provide a heating system which satisfactorily overcomes the problems described above.

This object is achieved, according to the present invention, by a heating system having the characteristics claimed in the Claims which follow this description.

Further advantages and characteristics of the present invention will become apparent from the following detailed description, provided purely by way of example with reference to the appended drawings, in which:
Figure 1 is a perspective view of a motor vehicle provided with a heating system according to the present invention;
Figure 2 is a functional electrical diagram of the aforesaid heating system; and
Figures 3 and 4 are graphs showing the operation of the heating system.

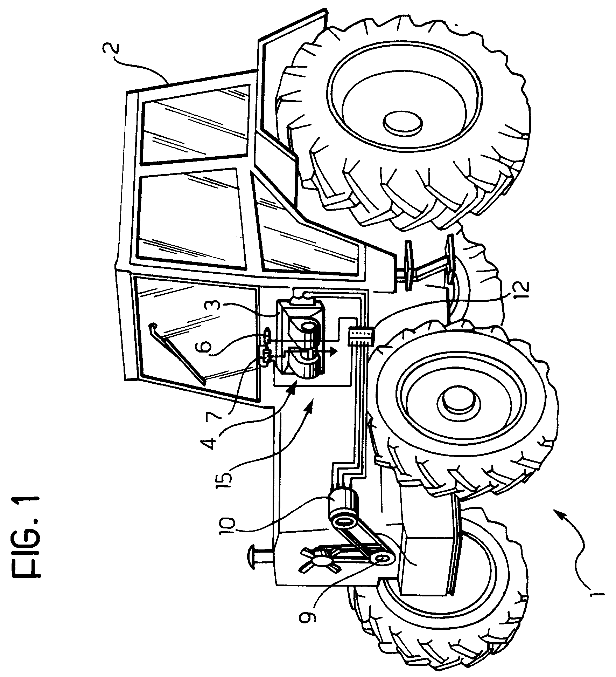

With reference in particular to Figure 1, a motor vehicle, in particular a tractor, is indicated 1 and has a driving cabin 2 defining the compartment for the driver within. A resistor 3, for example a strip resistor or a coil resistor, is arranged inside the cabin 2, at the front, along with a heater fan 4 provided to convey air into the driver's compartment of the cabin 2 and through the resistor 3.

Two control elements, 6 and 7, are accessible from inside the driver's compartment for adjusting the power dissipated by the resistor 3 and the speed of the electric motor (not shown) of the heater fan 4 respectively.

In Figure 1, the resistor 3 is supplied by a generator 10, for example a three-phase alternator, which is driven by a power take-off 9, for example from the driving shaft of the vehicle 1, through a belt 11, while the motor of the heater fan 4 is supplied with positive voltage in a known manner which is not illustrated by an ordinary accumulator battery normally provided in the vehicle 1.

The resistor 3 and the heater fan 4 are connected to their respective electric power supplies by a wiring junction box 12.

The resistor 3, the heater fan 4 and the associated control elements 6 and 7 constitute, together with the generator 10, a heating system, generally indicated 15, for the driver's compartment inside the cabin 2 of the motor vehicle 1.

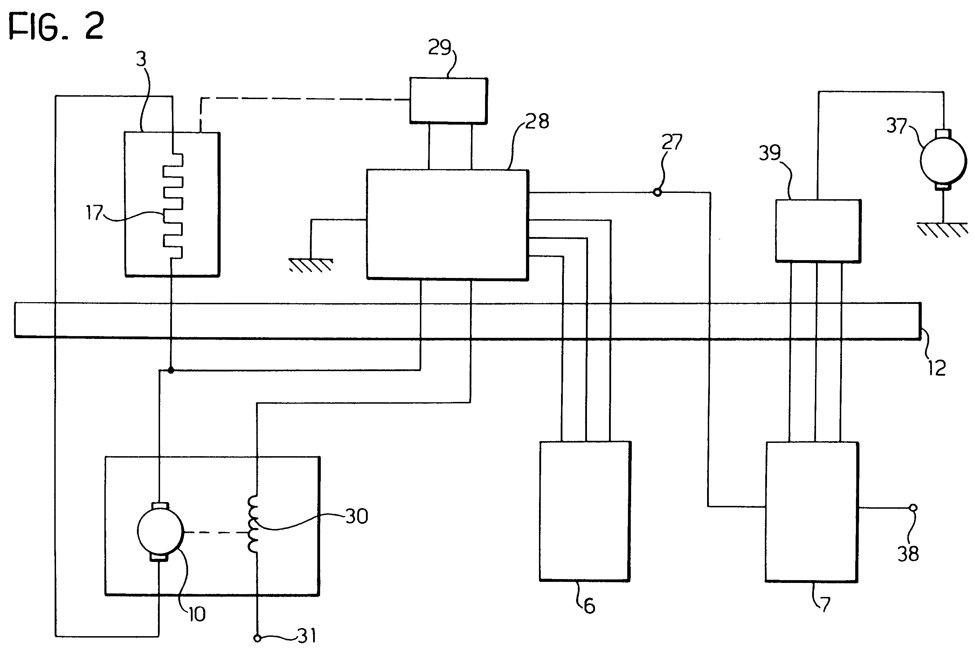

In order better to understand the operation of the heating system 15, the electrical arrangement will now be described, with reference to Figure 2.

In particular, the resistor 3 includes at least one resistance element 17, the terminals of which are connected, via the junction box 12, to the generator 10 supplying an alternating voltage.

The generator 10 has an excitation winding 30 with a first terminal connected to the positive output pole 31 and a second terminal connected to an electronic control unit 28 which regulates the excitation voltage, and thus the current, in accordance with the control element 6.

The control unit 28, supplied by a positive pole 27 from the control element 7 and an earth connection, is connected to a temperature sensor 29 arranged on the resistor 3 and to a terminal of the generator 10.

As to the supply of the heater fan 4, Figure 2 shows a motor 37 of this heater fan 4 with a first terminal earthed and a second terminal connected to the positive pole 38 via a series circuit which includes in order a common terminal, a current-regulator 39 and a control element 7.

The heating system 15 operates as follows.

It is supposed, first of all, that the combustion engine of the vehicle 1 is running; in these conditions the shaft of the generator 10 is rotating and, if the wipers of the control elements 6 and 7 are in their minimum positions, no excitation current is flowing to the winding 30 and therefore no electrical signal is available at the outputs of the generator 10.

If the control elements 6 and 7 are at a position other than minimum, current flows to the control unit 28 and the winding 30, as well as through the control element 7 and thus to the current-regulator 39 and the motor 37.

In particular, the current in the winding 30 may be regulated by acting on the control element 6; as a result, since this current is the excitation current of the generator 10, it determines corresponding values for the voltage supplied at the three outputs of the generator 10 and therefore for the power dissipated in the resistor 3.

Actuation of the control element 6 results in an appropriate production of heat energy by the resistor 3, with this value being adjustable from zero to a maximum value which corresponds to the maximum value of excitation current which can flow in the winding 30.

The motor 37 of the heater fan 4 is also supplied through the control element 7 and the regulator 39.

The position of the control element 7 enables the speed of the motor 37, and therefore the dissipation of the resistor 3 heat into the interior of the cabin 2, to be varied.

The speed of the motor 37 is always such that, even when running at its minimum, there is a sufficient dissipation of the heat generated by the resistor 3, even if this latter is at its maximum value.

There is therefore no delay before the driver's compartment 2 begins to warm up as, under normal conditions, heating may get under way as soon as the engine of the vehicle 1 is started. In addition, this heating system does not need heat to be drawn from the engine, meaning that this can reach its correct running temperature, and thus its correct operating condition, in a shorter period of time.

The operation of the control system of the heating system of the invention is described hereafter, this heating system being based around the electronic unit 28.

The central control unit 28 manages the alternator 10, by acting on the excitation control thereof and delivering a linear output voltage proportional to the demand of the control element, in this case a potentiometer 6.

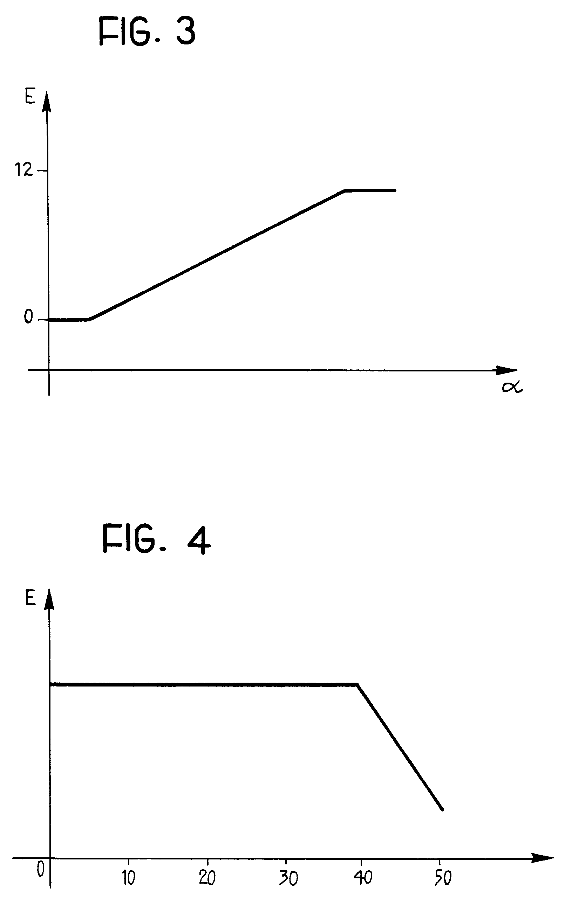

In substance, the control unit 28 interfaces the demand potentiometer 6, which typically feeds a stabilised signal of from 0 to 5V (500 µA), and delivers power to the excitation winding of the alternator, for example from 0 to 12V up to a maximum of 6A. The potentiometer 6 operates according to a transfer function shown by the graph of Figure 3 which shows the excitation voltage E as a function of the angle of rotation of the potentiometer 6.

The special characteristic of the control system provided in the control unit 28 consists in having a low voltage drop under conditions of maximum excitation, so as to give a high performance.

Control is carried out in a closed loop by taking the voltage delivered by the alternator 10 and then controlling the level of excitation in a linear manner.

In effect, the voltage delivered by the alternator 10 essentially depends on the excitation level E, but also on the electric load connected to it, which in this case is the resistor 3.

Owing to the tolerances of the resistor 3 and to the variable RPM of the alternator 10, the voltage may rise above levels considered dangerous to man, as mentioned earlier.

In order to deal with this problem, the central unit 28 is arranged to control the alternator 10 in a closed loop, relating the excitation voltage E to the delivered voltage V according to the graph of Figure 4 and thus making sure that it does not exceed a predetermined threshold, for example 50V.

The central unit 28 also protects the heating element 3 against overheating by means of an NTC temperature sensor 29 arranged thereon.

In order to prevent possible abnormal situations, such as overheating due to external causes such as a high air temperature, blockage of the heater fan 4, accidental short circuits or the like, the central unit 28 monitors the temperature of the resistor 3 by means of the aforesaid NTC sensor 29 and controls the excitation E by acting on the control voltage.

Supposing, by way of example, that the resistor 3 is contained in a plastic casing fixed to the air-conditioning system, then the following temperature conditions may be set:

| | |
|---|---|
| 1) normal | up to 85°C |
| 2) hot | between 86°C and 125° |
| 3) too hot | above 125°C. |

In the first, "normal" condition, the central unit 28 makes no adjustment to the power demand from the user.

In the second, "hot" condition, it reduces the excitation to a percentage of the demand from the user (for example 70%).

In the third, "too hot" condition, it is necessary to eliminate excitation thereby inhibiting the demand from the user.

The present invention provides numerous advantages.

The differential closed loop control makes it possible to control the excitation, and thus the temperature, even under difficult conditions such as when the alternator 10 is running at a very high RPM, with consequent dangerous excess voltage and/or very high temperatures.

The feedback involving the NTC sensor 29 enables the excitation E, and therefore the output temperature of the heating system 15, to be controlled, even when operating conditions such as the ambient temperature vary or when abnormal situations arise.

The linear control used generates no electrical interference and is therefore perfectly compatible with any radio equipment.

Naturally, the principle of the invention remaining unchanged, manufacturing details and embodiments may be widely varied from those described and illustrated, without departing from the scope of the present invention.

## Claims

1. A system for heating the driver's compartment (2) of a motor vehicle (1) including at least one resistor (3) housed in the said compartment (2) and electrical means (10) for supplying the said resistor (3); the said resistor (3) being provided to convert electrical energy received from the said electrical means (10) into heat energy, thereby heating itself and thus the said compartment (2),
characterised in that it also includes processor means (28), operatively connected to the said electrical means (10) and to the said resistor (3),
the said processor means (28) being arranged so as to control the electrical energy delivered by the said electrical means (10) to the said resistor (3), in dependence on a command given by a user of the said vehicle (1), in such a way that a voltage (V) produced by the said electrical means (10) does not exceed a predetermined threshold value.

2. A system according to Claim 1, characterised in that the said processor means (28) are arranged so that the temperature of the said resistor (3) does not exceed a predetermined threshold value.

3. A system according to Claim 1 or Claim 2, characterised in that the said electrical means include an alternator (10) in which the energy generated is controlled by regulating the current flowing through an excitation winding (30) of the said alternator (10).

4. A system according to Claim 3, characterised in that it includes control means (6), which may be activated by the user, for regulating the energy generated by the said alternator (10), the said processor means (28) being operatively interposed between the said control means (6) and the said alternator (10) and arranged to control the said alternator (10) so that it generates the energy required by the user provided that the said voltage (V) and the said temperature do not exceed respective predetermined threshold values.

5. A system according to Claim 4, characterised in that the said threshold value of the voltage (V) is 50V.

6. A system according to Claim 4 or Claim 5, characterised in that the said threshold temperature value is 125°C.

7. A system according to Claim 6, characterised in that the said processor means (28) are arranged so as to reduce the energy generated by the said alternator (10) to a predetermined temperature range between the predetermined threshold value and a further predetermined value lower than the threshold value.

8. A system according to any Claim from 1 to 7, characterised in that it includes temperature sensor means (29) associated with the resistor (3) and operatively connected to the processor means (28).

9. A system according to Claim 8, characterised in that the said sensor means include a resistor (29) having a negative temperature coefficient.

10. A system according to any of the preceding Claims, characterised in that it includes a heater fan (4) arranged to cooperate with the resistor (3) to dissipate heat produced by the resistor (3) into the motor vehicle (1).
